# EUROPÄISCHE PATENTSCHRIFT

(11) **EP 3 676 125 B1**
(45) Veröffentlichungstag und Bekanntmachung des Hinweises auf die Patenterteilung: **16.08.2023**
(21) Anmeldenummer: 18800506.0
(22) Anmeldetag: 24.10.2018
(51) Int. Cl.: B60M 1/20

(54) **OBERLEITUNGSANLAGE**
OVERHEAD LINE SYSTEM
INSTALLATION À LIGNE DE CONTACT

(30) Priorität: 22.11.2017 DE 102017220885
(43) Veröffentlichungstag der Anmeldung: 08.07.2020
(73) Patentinhaber: Siemens Mobility GmbH, 81739 München (DE)
(72) Erfinder: SCHAEFER-ENKELER, Andreas, 91341 Röttenbach (DE); BRODKORB, Albrecht, 99820 Hörselberg-Hainich (DE)
(74) Vertreter: Siemens Patent Attorneys
(86) Internationale Anmeldenummer: PCT/EP2018/079131
(87) Internationale Veröffentlichungsnummer: WO 2019/101462

(56) Entgegenhaltungen:
- CH-A- 295 292
- DE-C- 931 288
- GB-A- 329 125
- JP-U- S5 863 129
- JP-U- S5 863 129
- US-A- 472 810
- US-A- 3 644 688
- FURRER B: "FAHRLEITUNGSSYSTEM LIRACOS FUER NAHVERKEHRSBAHNEN", EB- ELEKTRISCHE BAHNEN, DIV-DEUTSCHER INDUSTRIEVERLAG, Bd. 95, Nr. 9, 1. September 1997 (1997-09-01), Seiten 256-260, XP000702884, ISSN: 0013-5437

## Beschreibung

Die Erfindung betrifft eine Oberleitungsanlage für eine in einer Längsrichtung verlaufenden Fahrstrecke gemäß Anspruch 1.

Die Erfindung betrifft weiterhin ein Verfahren zum Reduzieren einer lateralen Fahrdrahtabweichung einer Oberleitungsanlage gemäß Anspruch 8. Bei bekannten Oberleitungsanlagen für eine verkehrstechnische Anlage, wie beispielsweise Eisenbahnen, ist der Fahrdraht oberhalb einer Fahrstrecke angeordnet, die für die Fahrzeuge der verkehrstechnischen Anlage vorgesehen ist. Während der Fahrt haben die Fahrzeuge schleifenden Kontakt mit dem Fahrdraht, um die nötige Traktionsenergie aus dem Fahrdraht zu beziehen. Eine maximal mögliche Längsspannweite zwischen den Trageinrichtungen der Oberleitungsanlage ist entscheidend für die Kosten zur Installation und auch für die Funktionsfähigkeit der Oberleitungsanlage während des Betriebs. Die Trageinrichtungen der Oberleitungsanlage sind üblicherweise als im Boden befestigte Masten ausgebildet, es können beispielsweise im innerstädtischen Bereich aber auch andere Bauwerke, wie Häuser, Lärmschutzwände oder ähnliches, verwendet werden.

Die maximal mögliche Längsspannweite oder der maximal mögliche Mastabstand bestimmt sich aus einer nutzbaren Schleifleistenbreite eines Stromabnehmers am Fahrzeug, einem maximal anzunehmenden Windabtrieb der Fahrleitung und der Streckengeometrie. Somit bestimmt sich die maximal mögliche Längsspannweite in Summe aus einer maximal zulässigen lateralen Fahrdrahtabweichung von einer Streckenmitte, z. B. der Gleismitte. Für einen häufig vorkommenden interoperablen Betrieb, d. h. für Fahrzeug mit unterschiedlich nutzbaren Schleifleistenbreiten, bestimmt die kleinste Schleifleistenbreite die lateral zulässige Fahrdrahtabweichung von der Fahrstreckenmitte und damit den maximal möglichen Mastabstand bzw. die maximal mögliche Längsspannweite.

Bei einer Erhöhung des maximal anzunehmenden Windabtriebs oder bei Umstellung auf eine geringere Schleifleistenbreite, z. B. durch ein neues Fahrzeug, verringert sich also die zulässige Fahrdrahtabweichung von der Fahrstreckenmitte. Um die verringerte Fahrdrahtabweichung zu erreichen, müsste eine neue Oberleitungsanlage mit verringerten Längsspannweiten errichtet werden, was wirtschaftlich nicht möglich ist.

In der CH 295292 A ist die Vereinfachung einer Fahrdrahtaufhängung unter Verwendung freitragender Seitenhalter bei Fahrleitungen elektrischer Bahnen beschrieben, die die zusätzliche elastische Y-Aufhängung eines Seitenhalters überflüssig macht.

Aus der US 472810 A ist ein Fahrdraht bekannt, der mit Querdrähten, die an einem im Boden verankerten Mast befestigt sind, verbunden ist.

Es ist daher die Aufgabe der vorliegenden Erfindung, eine Oberleitungsanlage und ein Verfahren der eingangs genannten Art bereitzustellen, mit denen größere Längsspannweiten auf einfache Weise realisierbar sind.

Für die Oberleitungsanlage der eingangs genannten Art wird die Aufgabe erfindungsgemäß durch die Merkmale des unabhängigen Anspruchs 1 gelöst.

Für das eingangs genannte Verfahren wird die oben genannte Aufgabe erfindungsgemäß durch die Merkmale des unabhängigen Anspruchs 8 gelöst.

Die erfindungsgemäße Lösung hat den Vorteil, dass sich auf einfache Weise ein Abstand zwischen den mit den Trageinrichtungen verbundenen Fixiereinrichtungen reduzieren lässt. Weiterhin ist die Erfindung auch für Umbauten sehr gut anwendbar, so dass auch bestehende Oberleitungsanlagen mittels der Erfindung leicht umgerüstet werden können, um eine verringerte laterale Fahrdrahtabweichung zu erreichen.

Erfindungsgemäß wird es durch die zusätzliche zweite Fixiereinrichtung möglich, den mittleren Abstand zwischen den Fixiereinrichtungen der Oberleitungsanlage insgesamt zu verringern, ohne dass zusätzliche Trageinrichtungen nötig sind. Dies wird durch eine Erhöhung der Anzahl an Fixiereinrichtungen erreicht. So können die Kosten für eine neue Oberleitungsanlage oder den Umbau einer bestehenden Oberleitungsanlage verringert werden.

Die Erfindung kann durch vorteilhafte Ausgestaltungen weiter entwickelt werden, wie sie im Folgenden beschrieben sind. So kann der Abstand zwischen der ersten und der zweiten Fixiereinrichtung, die mit der gleichen Trageinrichtung verbunden sind, größer als 2 m sein. Dies hat den Vorteil, dass eine deutliche Reduzierung der Fahrdrahtabweichung von der Mitte der Fahrstrecke bei konstruktiv überschaubarem Aufwand erreicht wird. Desto größer der Abstand zwischen der ersten und zweiten Fixiereinrichtung, die mit der gleichen Trageinrichtung verbunden sind, desto größer ist die Reduzierung der lateralen Fahrdrahtabweichungen von der Mitte der Fahrstrecke.

Ferner kann der Fahrdraht in der Längsrichtung im Wesentlichen zick-zack förmig verlaufen. Für diese übliche Anordnung des Fahrdrahts ist die erfindungsgemäße Lösung besonders vorteilhaft. Die zick-zack-förmige Verlegung des Fahrdrahts in der Längsrichtung wird verwendet, um den Verschleiß der Schleifleiste am Stromabnehmer der Fahrzeuge gleichmäßig zu verteilen.

Weiterhin kann die Oberleitungsanlage wenigstens eine Spannvorrichtung aufweisen, die den Fahrdraht im Wesentlichen in der Längsrichtung spannt. Die an sich bekannte Spannvorrichtung für den Fahrdraht macht die erfindungsgemäße Lösung besonders effektiv. Durch die Spannung des Fahrdrahts wird ebenfalls die laterale Fahrdrahtabweichung reduziert, so dass die Kombination mit der Erfindung besonders vorteilhaft erscheint.

Um die erfindungsgemäße Lösung besonders einfach umzusetzen, können die ersten und die zweiten Fixiereinrichtungen jeweils wenigstens einen Seitenhalter aufweisen, die den Fahrdraht im Wesentlichen quer zur Längsrichtung fixieren. Seitenhalter sind das erprobte Mittel, um eine Fixierung quer zur Längsrichtung des Fahrdrahts zu erreichen.

Um die ersten und die zweiten Fixiereinrichtungen stabil und einfach anordnen zu können, weist wenigstens eine der Trageinrichtungen erfindungsgemäß wenigstens ein Traversenelement auf, dass im Wesentlichen in der Längsrichtung verläuft und mit der ersten und der zweiten Fixiereinrichtung verbunden ist. Ferner kann die Länge des Traversenelements in der Längsrichtung größer oder gleich dem Abstand zwischen der ersten und zweiten Fixiereinrichtung sein. Dadurch wird die Trageinrichtung der erfindungsgemäßen Oberleitungsanlage konstruktiv einfach aufgebaut.

Erfindungsgemäß weist die Oberleitungsanlage wenigstens ein mit den Trageinrichtungen verbundenes Tragseil auf, an dem der wenigstens eine Fahrdraht aufgehängt ist und das an jeweils einem oder zwei Haltepunkten mit den Trageinrichtungen verbunden ist. Insbesondere bei der Ausführungsform mit einem Haltepunkt kann die Erfindung material- und damit kostensparend ausgebildet werden.

Für eine konstruktiv besonders einfache Ausbildung der Erfindung können die ersten und die zweiten Fixiereinrichtungen jeweils wenigstens ein Stützrohr umfassen, das sowohl mit der Trageinrichtung als auch mit dem Tragseil verbunden ist.

Im Folgenden wird die Erfindung mit Bezug auf die beigefügten Zeichnungen erläutert.

Es zeigen:
- Figur 1: eine schematische Darstellung einer Oberleitungsanlage aus dem Stand der Technik;
- Figur 2: eine schematische Darstellung eines Fahrdrahtverlaufs der Oberleitungsanlage aus Figur 1 mit einer Windabweichung;
- Figur 3: eine schematische Darstellung einer erfindungsgemäßen Oberleitungsanlage in einer beispielhaften Ausführungsform;
- Figur 4: eine schematische Darstellung des Fahrdrahtverlaufs der Oberleitungsanlage aus Figur 3;
- Figur 5: eine schematische Darstellung einer Trageinrichtung einer erfindungsgemäßen Oberleitungsanlage;
- Figur 6: eine schematische Darstellung einer alternativen Trageinrichtung einer erfindungsgemäßen Oberleitungsanlage.

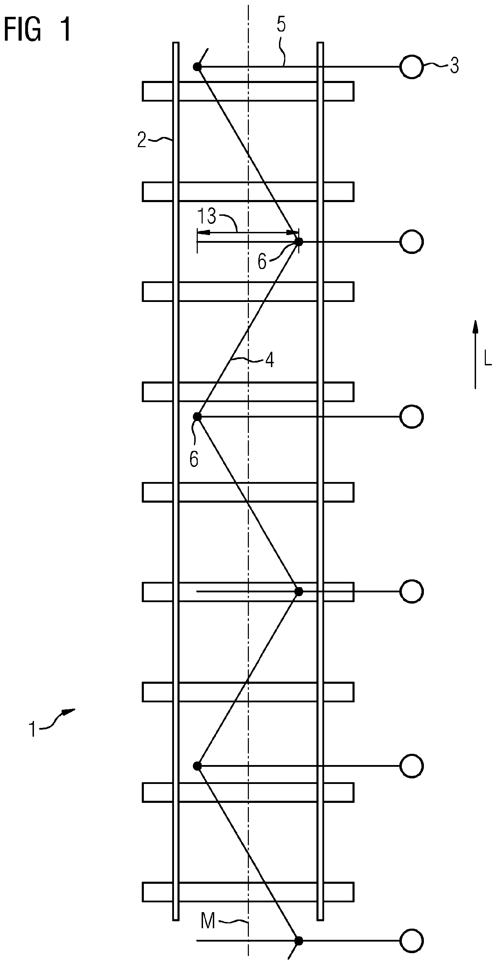

Figur 1 zeigt eine Oberleitungsanlage 1 gemäß dem Stand der Technik, die entlang einer Fahrstrecke 2 einer verkehrstechnischen Anlage ausgebildet ist. Die Fahrstrecke 2 ist hier als eine Gleisanlage dargestellt, auf der sich ein nicht dargestelltes Fahrzeug in einer Längsrichtung L der Fahrstrecke 2 bewegen kann. Die Oberleitungsanlage 1 ist vorgesehen, um das Fahrzeug mit der nötigen Traktionsenergie zu versorgen. Die Oberleitungsanlage 1 besteht aus mehreren Trageinrichtungen 3 und aus einem mit den Trageinrichtungen 3 verbundenen Fahrdraht 4. Die Trageinrichtungen 3 sind hier als Masten dargestellt, sie können alternativ aber beispielsweise auch andere Bauwerke sein. An den Trageinrichtungen 3 ist jeweils eine erste Fixiereinrichtung 5 angeordnet, die den Fahrdraht 4 quer zur Längsrichtung L fixiert. Der Fahrdraht 4 verläuft in der Längsrichtung L im Wesentlichen zick-zack-förmig, um eine gleichmäßige Abnutzung einer Schleifleiste des Fahrzeugs zu erreichen. Die Zick-Zack-Form wird dadurch erreicht, dass der Fahrdraht abwechselnd auf unterschiedlichen Seiten von einer Mitte M der Fahrstrecke 2 an den Fixiereinrichtungen 5 befestigt ist. Der Fahrdraht 4 ist an ersten Fixierpunkten 6 mit den ersten Fixiereinrichtungen 5 verbunden.

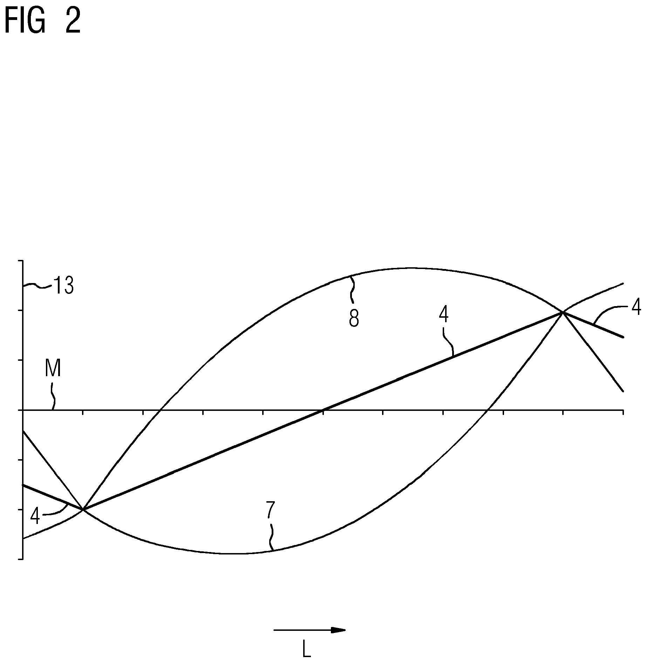

Figur 2 zeigt den zick-zack-förmigen Verlauf des Fahrdrahts 4 aus Figur 1. Zusätzlich ist in dem Diagramm in Figur 2 eine laterale Fahrdrahtabweichung von der Mitte M durch einen maximal anzunehmenden Windabtrieb quer zur Längsrichtung L durch eine rechte Abweichungslinie 7 und eine linke Abweichungslinie 8 dargestellt.

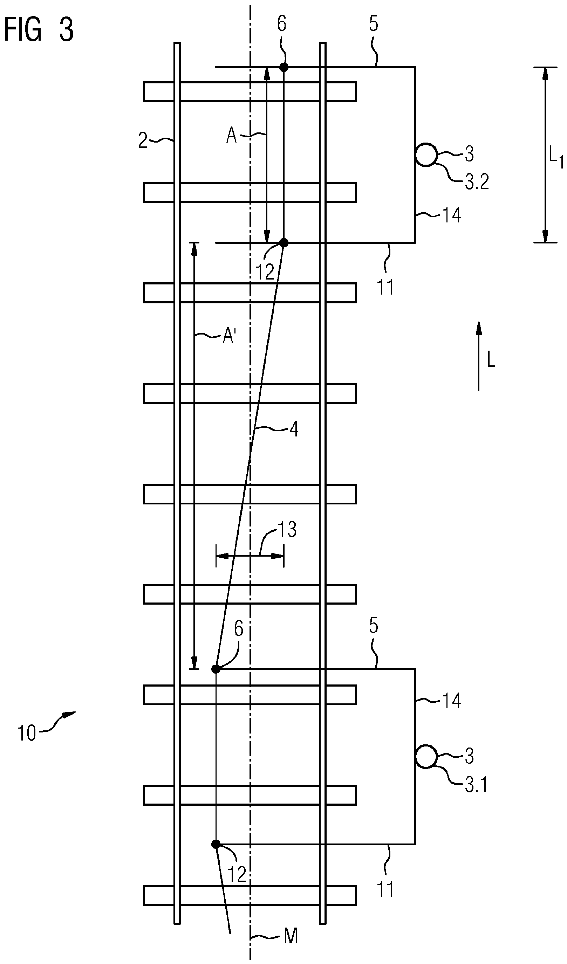

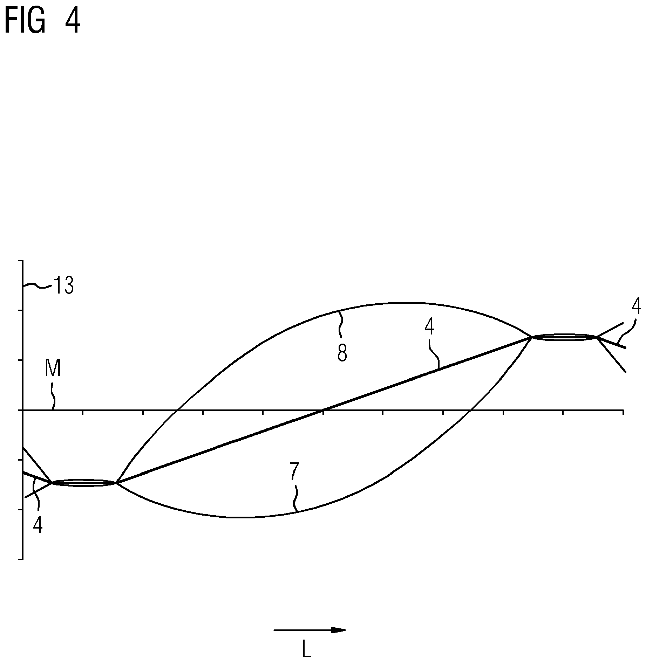

Im Folgenden wird die erfindungsgemäße Oberleitungsanlage 10 mit Bezug auf die Figuren 3 und 4 erläutert. Der Einfachheit halber werden die gleichen Bezugszeichen wie bei der Oberleitungsanlage 1 in den Figuren 1 und 2 verwendet, wenn dies sinnvoll erscheint.

Ähnlich wie aus dem Stand der Technik bekannt, umfasst die erfindungsgemäße Oberleitungsanlage 10 mehrere Trageinrichtungen 3 und einen mit den Trageinrichtungen 3 verbundenen Fahrdraht 4. Erfindungsgemäß ist der Fahrdraht 4 jedoch über eine erste Fixiereinrichtung 5 und zusätzlich über eine zweite Fixiereinrichtung 11 quer zur Längsrichtung L fixiert. Die erste und die zweite Fixiereinrichtung 5, 11 sind beide mittels wenigstens einem im Wesentlichen in der Längsrichtung L verlaufenden Traversenelement 14 mit derselben Trageinrichtung 3 und demselben Fahrdraht 4 verbunden. In der Längsrichtung L ist ein Abstand A zwischen der ersten und der zweiten Fixiereinrichtung 5, 11 ausgebildet. Der Fahrdraht 4 ist an einem ersten Fixpunkt 6 und an einem zweiten Fixpunkt 12 mit den Fixiereinrichtungen 5, 11 und damit mit der Trageinrichtung 3 verbunden. Zwischen dem ersten Fixierpunkt 6 und dem zweiten Fixierpunkt 12 derselben Trageinrichtung 3 verläuft der Fahrdraht in dieser erfindungsgemäßen Ausführungsform im Wesentlichen parallel zur Mitte M der Fahrstrecke 2. Zwischen dem ersten Fixierpunkt 6 einer Trageinrichtung 3.1 und dem zweiten Fixierpunkt 12 einer benachbarten nächsten Trageinrichtung 3.2 verläuft der Fahrdraht 4 im Wesentlichen schräg zur Mitte M. Dadurch verläuft der Fahrdraht 4 in der Längsrichtung L zwar weiterhin zick-zack-förmig wie im Stand der Technik, allerdings mit einer geringeren lateralen Fahrdrahtabweichung 13.

Alternativ kann der Fahrdraht 4 auch zwischen den ersten und zweiten Fixierpunkten 6, 12 derselben Trageinrichtung 3 schräg zur Mitte M verlaufen, aber mit einem anderen Winkel als zwischen den ersten und zweiten Fixierpunkten 6, 12 benachbarter Trageinrichtungen 3.1, 3.2.

In Figur 4 ist die verringerte laterale Fahrdrahtabweichung 13 in Diagrammform dargestellt. Im Vergleich zur Darstellung in Figur 2 gemäß dem Stand der Technik hat sich die laterale Fahrdrahtabweichung 13 für die erfindungsgemäße Oberleitungsanlage 10 in Figur 4 reduziert. Der Abstand A der ersten Fixiereinrichtung 5 zur zweiten Fixiereinrichtung 11 und des ersten Fixierpunkts 6 zum zweiten Fixierpunkt 12 beträgt bei der beispielhaften Ausführungsform in Figur 3 und 4 mehr als 2 m. Durch die erfindungsgemäße Lösung ist der größte Abstand A' zwischen ersten oder zweiten Fixierpunkten 6, 12 im Vergleich zu Oberleitungsanlagen 1 aus dem Stand der Technik reduziert. Dadurch kann die maximale laterale Fahrdrahtabweichung 13 reduziert werden, wie in Figur 4 dargestellt.

Zusätzlich kann die Erfindung bei Neuanlagen dafür genutzt werden, dass ein größerer Mastabstand zwischen den Trageinrichtungen 3 möglich ist. Dadurch verringern sich die Gesamtkosten einer Neuanlage.

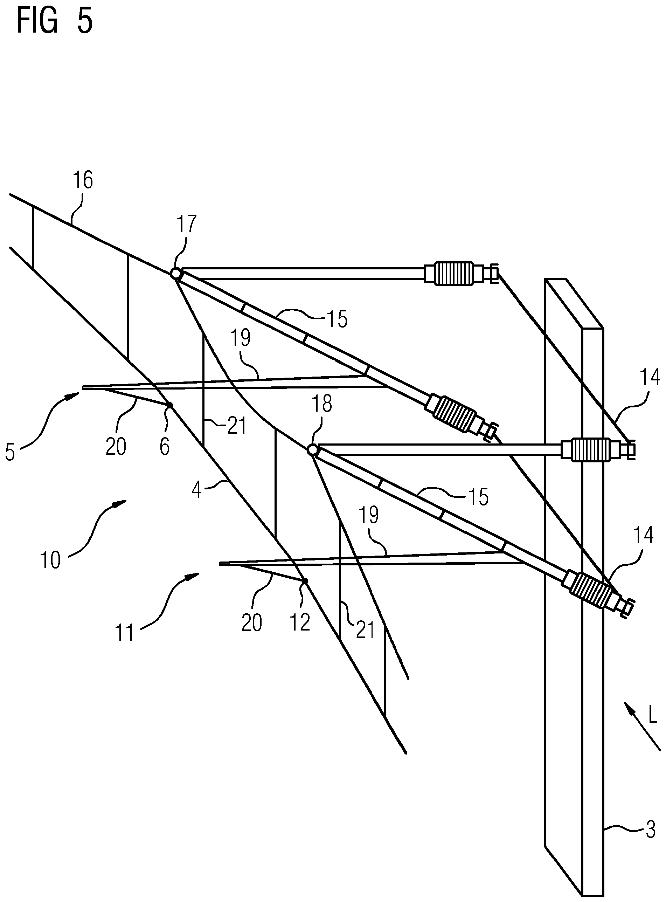

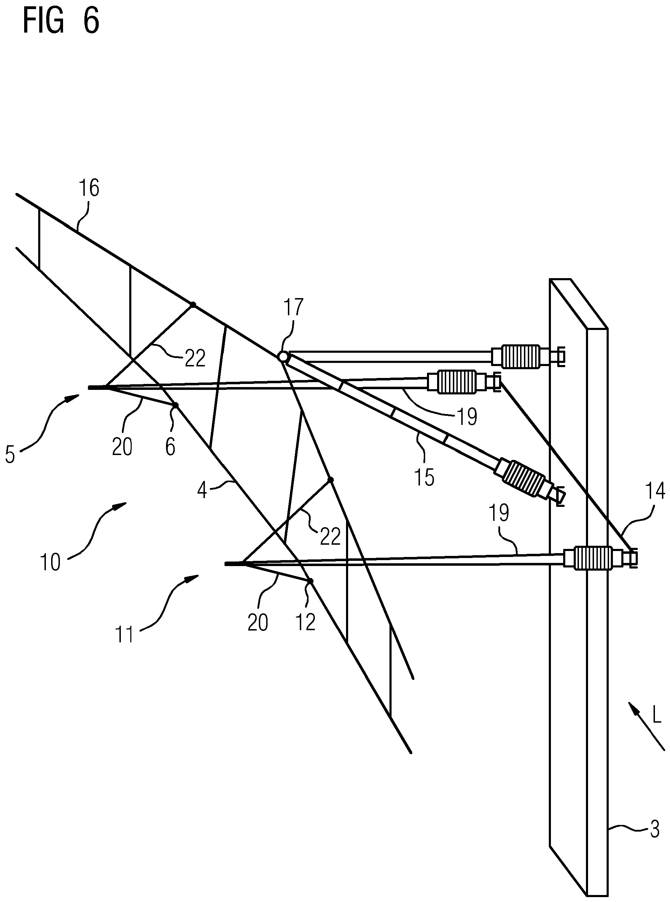

Im Folgenden werden mit Bezug auf die Figuren 5 und 6 weitere Details der erfindungsgemäßen Oberleitungsanlage 10 aus Figur 3 beschrieben.

Figur 5 zeigt eine als rechteckiger Mast ausgebildete Trageinrichtung 3. Die Trageinrichtung 3 weist zwei übereinander angeordnete und im Wesentlichen in der Längsrichtung L verlaufende Traversenelemente 14 auf, an denen die erste Fixiereinrichtung 5 und die zweite Fixiereinrichtung 11 angeordnet sind. Die erste und die zweite Fixiereinrichtung 5, 11 umfassen jeweils einen Ausleger 15, an dem ein Tragseil 16 an Haltepunkten 17, 18 befestigt ist. An den Auslegern 15 sind ferner jeweils Stützrohre 19 angeordnet, an die wiederum jeweils Seitenhalter 20 angeordnet sind. Jeder Seitenhalter 20 fixiert den Fahrdraht 4 quer zur Längsrichtung L. Der Fahrdraht 4 ist über Hänger 21 am Tragseil 16 aufgehängt und wird über eine nicht dargestellte Spannvorrichtung in der Längsrichtung L gespannt.

Die in Figur 6 dargestellte Trageinrichtung 3 unterscheidet sich von der in Figur 5 dargestellten Trageinrichtung 3 dadurch, dass lediglich ein Traversenelement 14 vorgesehen ist, an dem die erste Fixiereinrichtung 5 und die zweite Fixiereinrichtung 11 angeordnet sind. Die erste Fixiereinrichtung 5 umfasst in dieser Ausführungsform das Stützrohr 19 und einen Seitenhalter 20. Das Stützrohr 19 ist sowohl bei der ersten Fixiereinrichtung 5 als auch bei der zweiten Fixiereinrichtung 11 über ein Spannseil 22 mit dem Tragseil verbunden. Im Gegensatz zu der Ausführungsform in Figur 5 ist bei der Ausführungsform in Figur 6 nur ein Ausleger 15 vorgesehen und somit auch nur ein Haltepunkt 17, an dem das Tragseil 16 gehalten ist. Durch die Einsparung eines Auslegers können die Kosten der erfindungsgemäßen Oberleitungsanlage 10 reduziert werden.

## Patentansprüche

1. Oberleitungsanlage (1) für eine in einer Längsrichtung (L) verlaufenden Fahrstrecke (2),
mit mehreren mit einem Boden verbundenen Trageinrichtungen (3), mit wenigstens einem mit den Trageinrichtungen (3) verbundenen und im Wesentlichen in der Längsrichtung (L) verlaufenden Fahrdraht (4), einem Tragseil (16) an dem der wenigstens eine Fahrdraht (4) aufgehängt ist, und mit mehreren ersten Fixiereinrichtungen (5), die jeweils mit einer der Trageinrichtungen (3), mit dem Tragseil (16) und dem Fahrdraht (4) verbunden sind und den Fahrdraht (4) im Wesentlichen quer zur Längsrichtung (L) fixieren,
**gekennzeichnet durch**
wenigstens eine zweite Fixiereinrichtung (11), die den Fahrdraht (4) im Wesentlichen quer zur Längsrichtung (L) fixiert, mit derselben Trageinrichtung (3), dem Tragseil (16) und demselben Fahrdraht (4) wie eine der ersten Fixiereinrichtungen (5) verbunden ist und in der Längsrichtung (L) einen Abstand (A) zu dieser ersten Fixiereinrichtung (5) aufweist und das Tragseil (16) an jeweils einem oder zwei Haltepunkten (17, 18) mit den Trageinrichtungen (3) verbunden ist, wobei wenigstens eine der Trageinrichtungen (3) wenigstens ein Traversenelement (14) aufweist, das im Wesentlichen in der Längsrichtung (L) verläuft und mit der ersten und der zweiten Fixiereinrichtung (5, 11) verbunden ist.

2. Oberleitungsanlage (1) nach Anspruch 1,
**dadurch gekennzeichnet, dass** der Abstand (A) zwischen der ersten und der zweiten Fixiereinrichtung (5, 11), die mit der gleichen Trageinrichtung (3) verbunden sind, größer als 2 m ist.

3. Oberleitungsanlage (1) nach Anspruch 1 oder 2,
**dadurch gekennzeichnet, dass** der Fahrdraht (4) in der Längsrichtung (L) im Wesentlichen zick-zack förmig verläuft.

4. Oberleitungsanlage (1) nach einem der oben genannten Ansprüche,
**gekennzeichnet durch**
wenigstens eine Spannvorrichtung, die den Fahrdraht (4) im Wesentlichen in der Längsrichtung (L) spannt.

5. Oberleitungsanlage (1) nach einem der oben genannten Ansprüche,
**dadurch gekennzeichnet, dass**
die ersten und die zweiten Fixiereinrichtungen (5, 11) jeweils wenigstens einen Seitenhalter (20) aufweisen, die den Fahrdraht (4) im Wesentlichen quer zur Längsrichtung (L) fixieren.

6. Oberleitungsanlage (1) nach einem der oben genannten Ansprüche,
**dadurch gekennzeichnet, dass**
die Länge (L₁) des Traversenelements (14) in der Längsrichtung (L) größer oder gleich dem Abstand (A) zwischen der ersten und der zweiten Fixiereinrichtung (5, 11) ist.

7. Oberleitungsanlage (1) nach einem der oben genannten Ansprüche,
**dadurch gekennzeichnet, dass**
die ersten und zweiten Fixiereinrichtungen (5, 11) jeweils wenigstens ein Stützrohr (19) umfassen, das sowohl mit der Trageinrichtung (3) als auch mit dem Tragseil (16) verbunden ist.

8. Verfahren zum Reduzieren einer lateralen Fahrdrahtabweichung einer Oberleitungsanlage (1),
die mehrere mit einem Boden verbundene Trageinrichtungen (3), wenigstens einen mit den Trageinrichtungen (3) verbundenen und im Wesentlichen in einer Längsrichtung (L) einer Fahrstrecke (2) verlaufenden Fahrdraht (4), ein Tragseil (16) an dem der wenigstens eine Fahrdraht (4) aufgehängt ist, und mehrere jeweils mit einer Trageinrichtung (3), mit dem Tragseil (16) und dem Fahrdraht (4) verbundene erste Fixiereinrichtungen (5), die den Fahrdraht (4) im Wesentlichen quer zur Längsrichtung (L) fixieren, aufweist,
**dadurch gekennzeichnet, dass** mehrere mit jeweils derselben Trageinrichtung (3), dem Tragseil (16) und demselben Fahrdraht (4) verbundene zweite Fixiereinrichtungen (11) angeordnet werden, die den Fahrdraht (4) im Wesentlichen quer zur Längsrichtung (L) fixieren und in der Längsrichtung (L) jeweils einen Abstand (A) zur ersten Fixiereinrichtung (5) der jeweiligen Trageinrichtung (3) aufweisen und das Tragseil (16) an jeweils einem oder zwei Haltepunkten (17, 18) mit den Trageinrichtungen (3) verbunden wird und wenigstens eine der Trageinrichtungen (3) wenigstens ein Traversenelement (14) aufweist, das im Wesentlichen in der Längsrichtung (L) verläuft und mit der ersten und der zweiten Fixiereinrichtung (5, 11) verbunden wird.

## Claims

1. Overhead line system (1) for a route (2) running in a longitudinal direction (L),
having multiple support devices (3) connected to a base, having at least one contact wire (4) connected to the support devices (3) and running substantially in the longitudinal direction (L), having a support wire (16) on which the at least one contact wire (4) is suspended, and having multiple first fixing devices (5), which are each connected to one of the support devices (3), to the support wire (16) and to the contact wire (4) and fix the contact wire (4) substantially transversely to the longitudinal direction (L), **characterised by**
at least one second fixing device (11), which fixes the contact wire (4) substantially transversely to the longitudinal direction (L), is connected to the same support device (3), to the support wire (16) and to the same contact wire (4) as one of the first fixing devices (5) and in the longitudinal direction (L) has a distance (A) from this first fixing device (5), and the support wire (16) is connected to the support devices (3) in each case at one or two hold points (17, 18), wherein at least one of the support devices (3) has at least one traverse element (14) which runs substantially in the longitudinal direction (L) and is connected to the first and the second fixing device (5, 11).

2. Overhead line system (1) according to claim 1,
**characterised in that**
the distance (A) between the first and the second fixing device (5, 11), which are connected to the same support device (3), is greater than 2 m.

3. Overhead line system (1) according to claim 1 or 2,
**characterised in that**
the contact wire (4) runs substantially in a zigzag shape in the longitudinal direction (L).

4. Overhead line system (1) according to one of the above claims,
**characterised by**
at least one tensioning device that tensions the contact wire (4) substantially in the longitudinal direction (L).

5. Overhead line system (1) according to one of the above claims,
**characterised in that**
the first and the second fixing devices (5, 11) each have at least one lateral holder (20), which fix the contact wire (4) substantially transversely to the longitudinal direction (L).

6. Overhead line system (1) according to one of the above claims,
**characterised in that**
the length (L₁) of the traverse element (14) in the longitudinal direction (L) is greater than or equal to the distance (A) between the first and the second fixing device (5, 11).

7. Overhead line system (1) according to one of the above claims,
**characterised in that**
the first and second fixing devices (5, 11) each comprise at least one support tube (19), which is connected both to the support device (3) and to the support wire (16).

8. Method for reducing a lateral contact wire deviation of an overhead line system (1),
which has multiple support devices (3) connected to a base, at least one contact wire (4) connected to the support devices (3) and running substantially in a longitudinal direction (L) of a route (2), a support wire (16) on which the at least one contact wire (4) is suspended, and multiple first fixing devices (5), which are each connected to a support device (3), to the support wire (16) and to the contact wire (4), and which fix the contact wire (4) substantially transversely to the longitudinal direction (L),
**characterised in that**
multiple second fixing devices (11) connected in each case to the same support device (3), to the support wire (16) and to the same contact wire (4) are arranged, which fix the contact wire (4) substantially transversely to the longitudinal direction (L) and in the longitudinal direction (L) in each case have a distance (A) from this first fixing device (5) of the respective support device (3), and the support wire (16) is connected in each case to the support devices (3) at one or two hold points (17, 18), and at least one of the support devices (3) has at least one traverse element (14) which runs substantially in the longitudinal direction (L) and is connected to the first and the second fixing device (5, 11).

## Revendications

1. Installation (1) à ligne de contact pour un parcours (2) s'étendant dans une direction (L) longitudinale,
comprenant plusieurs dispositifs (3) porteurs reliés à un sol, comprenant au moins un fil de contact (4) relié aux dispositifs (3) porteurs et s'étendant sensiblement dans la direction (L) longitudinale, un câble (16) porteur, auquel le au moins un fil (4) de contact est suspendu, et comprenant plusieurs premiers dispositifs (5) de fixation, qui sont reliés chacun à l'un des dispositifs (3) porteurs, au câble (16) porteur et au fil (4) de contact et qui fixent le fil (4) de contact sensiblement transversalement à la direction (L) longitudinale,
**caractérisée par**
au moins un deuxième dispositif (11) de fixation, qui fixe le fil (4) de contact sensiblement transversalement à la direction (L) longitudinale, qui est relié au même dispositif (3) porteur, au câble (16) porteur et au même fil (4) de contact qu'un premier des dispositifs (5) de fixation, et qui a, dans la direction (L) longitudinale, une distance (A) à ce premier dispositif (5) de fixation, et le câble (16) porteur est relié aux dispositifs (3) porteurs en respectivement un ou deux points (17, 18) de maintien, dans lequel au moins l'un des dispositifs (3) porteurs a au moins un élément (14) de traverse, qui s'étend sensiblement dans la direction (L) longitudinale et qui est relié au premier et au deuxième dispositifs (5, 11) de fixation.

2. Installation (1) à ligne de contact suivant la revendication 1,
**caractérisée en ce que**
la distance (A) entre le premier et le deuxième dispositifs (5, 11) de fixation, qui sont reliés au même dispositif (3) porteur, est plus grande que 2 m.

3. Installation (1) à ligne de contact suivant la revendication 1 ou 2,
**caractérisée en ce que**
le fil (4) de contact s'étend dans la direction (L) longitudinale sensiblement en zig-zag.

4. Installation (1) à ligne de contact suivant l'une des revendications précédentes,
**caractérisée par**
au moins un dispositif de blocage, qui bloque le fil (4) de contact sensiblement dans la direction (L) longitudinale.

5. Installation (1) à ligne de contact suivant l'une des revendications précédentes,
**caractérisée en ce que**
le premier et le deuxième dispositifs (5, 11) de fixation ont chacun au moins un anti-balançant (20), qui fixe le fil (4) de contact sensiblement transversalement à la direction (L) longitudinale.

6. Installation (1) à ligne de contact suivant l'une des revendications précédentes,
**caractérisée en ce que**
la longueur (L₁) de l'élément (14) de traverse, dans la direction (L) longitudinale, est supérieure ou égale à la distance (A) entre le premier et le deuxième dispositifs (5, 11) de fixation.

7. Installation (1) à ligne de contact suivant l'une des revendications précédentes,
**caractérisée en ce que**
le premier et le deuxième dispositifs (5, 11) de fixation comprennent chacun au moins un tube (19) d'appui, qui est relié à la fois au dispositif (3) porteur et au câble (16) porteur.

8. Procédé de réduction d'un écart latéral du fil de contact d'une installation (1) à ligne de contact,
qui a plusieurs dispositifs (3) porteurs reliés à un sol, au moins un fil de contact (4) relié aux dispositifs (3) porteurs et s'étendant sensiblement dans la direction (L) longitudinale d'un parcours (2), un câble (16) porteur, auquel le au moins un fil (4) de contact est suspendu et plusieurs premiers dispositifs (5) de fixation, qui sont reliés chacun à l'un des dispositifs (3) porteurs, au câble (16) porteur et au fil (4) de contact et qui fixent le fil (4) de contact sensiblement transversalement à la direction (L) longitudinale,
**caractérisé en ce que**
on dispose plusieurs deuxièmes dispositifs (11) de fixation, qui sont reliés chacun au même dispositif (3) porteur, au câble (16) porteur et au même fil (4) de contact, qui fixent le fil (4) de contact sensiblement transversalement à la direction (L) longitudinale et qui ont, dans la direction (L) longitudinale, chacun une distance (A) au premier dispositif (5) de fixation du dispositif (3) porteur respectif, et on relie le câble (16) porteur aux dispositifs (3) porteurs en respectivement un ou deux points (17, 18) de maintien, et au moins l'un des dispositifs (3) porteurs a au moins un élément (14) de traverse, qui s'étend sensiblement dans la direction (L) longitudinale et que l'on relie au premier et au deuxième dispositifs (5, 11) de fixation.
